# EUROPEAN PATENT SPECIFICATION

(11) **EP 3 093 461 B1**
(45) Date of publication and mention of the grant of the patent: **04.10.2017**
(21) Application number: 16169466.6
(22) Date of filing: 12.05.2016
(51) Int. Cl.: F01N 3/08, F01N 3/20, F01N 9/00

(54) **EXHAUST PURIFICATION APPARATUS FOR ENGINE**
ABGASREINIGUNGSVORRICHTUNG FÜR MOTOR
APPAREIL DE PURIFICATION DES GAZ D'ÉCHAPPEMENT D'UN MOTEUR

(30) Priority: 13.05.2015 JP 2015098197
(43) Date of publication of application: 16.11.2016
(73) Proprietor: Mitsubishi Jidosha Kogyo K.K., Tokyo 108-8410 (JP)
(72) Inventor: Kawashima, Kazuhito, Tokyo, 108-8410 (JP); Anoda, Hiroshi, Tokyo, 108-8410 (JP); Kato, Ryoji, Tokyo, 108-8410 (JP); Takahashi, Masashi, Tokyo, 108-8410 (JP)
(74) Representative: Vossius & Partner Patentanwälte Rechtsanwälte mbB

(56) References cited:
- EP-A2- 1 158 150
- US-A1- 2010 071 347
- US-A1- 2013 186 064

## Description

### BACKGROUND OF THE INVENTION

### Field of the Invention

The present invention relates to an exhaust purification apparatus for an engine that purifies nitrogen oxide in exhaust.

### Description of the Related Art

An exhaust purification apparatus for purifying exhaust is provided in an exhaust passage of an engine. For example, in order to purify NOx (nitrogen oxide) in the exhaust of the engine, exhaust purification catalysts such as a NOx absorption catalyst and a selective reduction catalyst have been developed.

The NOx absorption catalyst absorbs the NOx in a lean atmosphere, and reduces and purifies the NOx to nitrogen in a rich atmosphere. Note that the NOx absorption catalyst has the property that secures the largest absorption capacity in a medium temperature zone, and decreases the absorption capacity in a lower temperature zone and a higher temperature zone than the medium temperature zone. On the other hand, the selective reduction catalyst reduces and purifies the NOx in the exhaust to nitrogen by using a reducing agent, such as ammonia, mainly in the higher temperature zone.

For example, Japanese Patent Publication No. 2009-62850 or publication US2013/0186064A1 disclose an exhaust purification apparatus that is provided with a NOx absorption catalyst in an exhaust passage of an engine, and is also provided with a selective reduction catalyst in the exhaust passage in the downstream side of the NOx absorption catalyst.

Meanwhile, in an engine provided with the NOx absorption catalyst in the exhaust passage, in order to remove the NOx absorbed in the NOx absorption catalyst, for example, NOx purge is performed as needed that sets the air/fuel ratio of the exhaust to a rich air/fuel ratio by fuel injection control of the engine, so as to supply HC (carbon hydride) and/or CO (carbon monoxide) to the NOx absorption catalyst.

However, when the NOx purge is performed in the case where the temperature of the NOx absorption catalyst is decreased, for example, at cold start-up, there is a possibility that the NOx is not reduced in the NOx absorption catalyst, and the NOx and wasted unburned fuels such as HC, CO, and/or the like are leaked.

### SUMMARY OF THE INVENTION

Therefore, an object of the present invention is to provide, in an engine including a nitrogen oxide absorption reduction catalyst and a selective reduction catalyst in an exhaust passage, an exhaust purification apparatus with excellent exhaust purification performance as well as a reduced fuel consumption.

In order to achieve the above-described object, an exhaust purification apparatus for an engine according to the present invention includes a nitrogen oxide absorption reduction catalyst provided in an exhaust passage of an engine, and absorbing nitrogen oxide in exhaust, a selective reduction catalyst provided in the exhaust passage on a downstream side of the nitrogen oxide absorption reduction catalyst, and reducing and purifying the nitrogen oxide by using a reducing agent, a first temperature detector configured to detect a temperature of the selective reduction catalyst, a nitrogen oxide absorption rate estimator configured to estimate a nitrogen oxide absorption rate of the nitrogen oxide absorption reduction catalyst, and a first purge controller configured to, when the temperature of the selective reduction catalyst is higher than a first temperature threshold value, and the nitrogen oxide absorption rate is higher than a first absorption threshold value, execute a first purge control that sets an air/fuel ratio of the exhaust flowing to the nitrogen oxide absorption reduction catalyst to a stoichiometric air/fuel ratio or to a slightly leaner air/fuel ratio than the stoichiometric air/fuel ratio, and causing the nitrogen oxide absorbed in the nitrogen oxide absorption reduction catalyst to be discharged from the nitrogen oxide absorption reduction catalyst to the downstream side.

As a result, in the exhaust purification apparatus for the engine according to the present invention, there are provided, in the exhaust passage, the nitrogen oxide absorption reduction catalyst having a high purification efficiency in a relatively low temperature zone and a selective reduction catalyst having a high purification efficiency in a high temperature zone. Accordingly, it is possible to improve the purification efficiency in a wide range of temperature zone. Further, since the selective reduction catalyst is provided in the downstream side of the nitrogen oxide absorption reduction catalyst, it is possible to reduce and purify the nitrogen oxide even when the nitrogen oxide is leaked from the nitrogen oxide absorption reduction catalyst.

Particularly, when the temperature of the selective reduction catalyst is higher than the first temperature threshold value, and the nitrogen oxide absorption rate is higher than the first absorption threshold value, the air/fuel ratio of the exhaust may be set to a stoichiometric air/fuel ratio or to a slightly leaner air/fuel ratio than the stoichiometric air/fuel ratio, the nitrogen oxide absorption reduction catalyst is caused to discharge the nitrogen oxide absorbed in the nitrogen oxide absorption reduction catalyst, and the discharged nitrogen oxide can be reduced and purified in the selective reduction catalyst.

Accordingly, the exhaust purification apparatus for the engine according to the present invention can decrease the nitrogen oxide absorption rate in the nitrogen oxide absorption reduction catalyst while reducing the fuel consumption. Additionally, when decreasing this nitrogen oxide absorption rate, the leakage of the nitrogen oxide to the outside is reduced by the selective reduction catalyst, and the discharging of unburned fuels are also reduced, thereby allowing improvement of the exhaust purification performance.

Preferably, when stopping of the engine is instructed, the first purge controller executes the first purge control by regulating the stopping of the engine until a predetermined time period elapses.

As a result, it is possible to stop the engine in a state where the nitrogen oxide absorption rate of the nitrogen oxide absorption reduction catalyst is decreased. Accordingly, it is possible to cause the nitrogen oxide absorption reduction catalyst to absorb the nitrogen oxide at the next engine starting, and thus it is possible to reduce the discharging of the nitrogen oxide immediately after the engine starting.

Preferably, the exhaust purification apparatus for the engine further includes an operation continuation estimator configured to estimate whether the operation of the engine is continued longer than a predetermined time period, and, when the operation continuation estimator estimates that the operation is continued longer than the predetermined time period, the first purge controller regulates starting of execution of the first purge control.

As a result, when it is estimated that the operation of the engine is continued longer than the predetermined time period, it is possible to decrease the nitrogen oxide absorption rate before the engine stops, without immediately performing the first purge control. Accordingly, it is possible to reduce the fuel consumption while avoiding the first purge control as far as possible.

Additionally, preferably, the engine is mounted, as a traveling driving source, on a vehicle including a navigation system, and the operation continuation estimator estimates, on the basis of a traveling route of the vehicle that is set in the navigation system, whether the operation is continued longer than the predetermined time period.

As a result, whether the operation is continued can easily be estimated on the basis of the traveling route of the vehicle that is set in the navigation system of the vehicle.

Additionally, preferably, the engine is mounted on a vehicle as a traveling driving source, and the operation continuation estimator estimates, on the basis of a traveling speed of the vehicle and an amount of change in the traveling speed, whether the operation is continued longer than the predetermined time period.

As a result, whether the operation is continued longer than the predetermined time period can easily be estimated on the basis of the traveling speed of the vehicle and the amount of change in the traveling speed.

Additionally, preferably, when the temperature of the selective reduction catalyst is equal to or less than the first temperature threshold value, the first purge controller regulates execution of the first purge control.

As a result, it is possible to reduce the discharging of the nitrogen oxide by not performing the first purge control when it is impossible to reduce and purify the nitrogen oxide by the selective reduction catalyst.

Additionally, preferably, the exhaust purification apparatus for the engine further includes a second purge controller configured to, when the temperature of the selective reduction catalyst is equal to or less than the first temperature threshold value, and the nitrogen oxide absorption rate is higher than a second absorption threshold value that is set to be a value higher than the first absorption threshold value, execute a second purge control that sets the air/fuel ratio of the exhaust to a rich air/fuel ratio, and causing the nitrogen oxide absorbed in the nitrogen oxide absorption reduction catalyst to be reduced and purified.

As a result, it is possible to reduce and purify the nitrogen oxide absorbed in the nitrogen oxide absorption reduction catalyst, thereby reducing the discharging of the nitrogen oxide.

Additionally, preferably, the exhaust purification apparatus for the engine further includes a second temperature detector configured to detect a temperature of the nitrogen oxide absorption reduction catalyst, and, when the temperature of the nitrogen oxide absorption reduction catalyst is lower than the second temperature threshold value, the second purge controller regulates execution of the second purge control.

As a result, it is possible to cause the nitrogen oxide absorption reduction catalyst to absorb the nitrogen oxide, and regulates the execution of the second purge control, thereby reducing the fuel consumption.

### BRIEF DESCRIPTION OF THE DRAWINGS

FIG. 1 is a schematic configuration diagram of an intake and exhaust system of an engine according to an embodiment of the present invention;
FIG. 2 is a flowchart showing a control procedure of an exhaust purification apparatus in an engine control unit of a first embodiment; and
FIG. 3 is a flowchart showing a control procedure of an exhaust purification apparatus in an engine control unit of a second embodiment.

### DETAILED DESCRIPTION OF THE PREFERRED EMBODIMENTS

Hereinafter, a description will be given of embodiments of the present invention on the basis of the drawings.

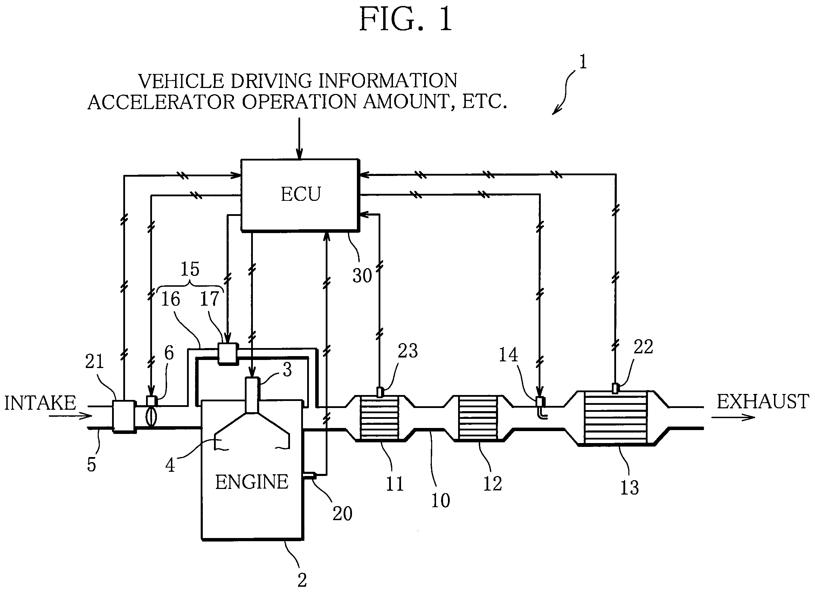

FIG. 1 is a schematic configuration diagram of an intake and exhaust system of a diesel engine (hereinafter referred to as "the engine 2") of a first embodiment to which an exhaust purification apparatus 1 of the present invention is applied.

The engine 2 is mounted on a vehicle as a traveling driving source, and is a cylinder direct injection engine with multiple cylinders. In FIG. 1, only one cylinder is shown for simplification. The engine 2 is configured such that a fuel can be injected into a combustion chamber 4 of each cylinder at arbitrary injection timings and with arbitrary injection quantity from a fuel injection nozzle 3 provided in each cylinder.

An electronically controlled throttle valve 6 for adjusting the flow rate of new air is provided in an intake passage 5 of the engine 2.

A NOx absorption catalyst 11 (nitrogen oxide absorption reduction catalyst), a diesel particulate filter 12, and a selective reduction catalyst 13 are provided in this order from the engine 2 toward the downstream in an exhaust passage 10 of the engine 2.

A urea water injector 14 for injection-supplying urea water (an aqueous urea solution) is provided in the exhaust passage 10 between the diesel particulate filter 12 and the selective reduction catalyst 13. The urea water injector 14 is supplied with the urea water from a urea water tank, which is mounted on the vehicle and is not shown.

The injection position of the urea water injector 14 is set such that the urea water injected from the urea water injector 14 into the exhaust passage 10 is hydrolyzed by the heat of exhaust to produce ammonia, and reaches the selective reduction catalyst 13.

The NOx absorption catalyst 11 absorbs nitrogen oxide (NOx) in the exhaust, and reduces and purifies the NOx in a high-temperature rich atmosphere.

The diesel particulate filter 12 collects fine particulate matter composed mainly of graphite in the exhaust.

The selective reduction catalyst 13 reduces and purifies the NOx in the exhaust by using the ammonia produced from the urea water as a reducing agent.

Additionally, the engine 2 is provided with an EGR apparatus 15. The EGR apparatus 15 is composed of an EGR passage 16 communicating the intake passage 5 with the exhaust passage 10, and an EGR valve 17 opening and closing the EGR passage 16.

Further, the engine 2 is provided with a rotation speed sensor 20 detecting the rotation speed of the engine 2. An air flow sensor 21 detecting the intake flow rate is provided in the intake passage 5 of the engine 2. The selective reduction catalyst 13 is provided with a selective reduction catalyst temperature sensor 22 (first temperature detector) detecting the temperature of the selective reduction catalyst 13. Additionally, the NOx absorption catalyst 11 is provided with a NOx absorption catalyst temperature sensor 23 (second temperature detector) detecting the temperature of the NOx absorption catalyst 11.

An engine control unit 30 (nitrogen oxide absorption rate estimator, first purge controller, second purge controller, operation continuation estimator) is composed by including an input/output device, a storage device (ROM, RAM, non-volatile RAM, and the like), a timer, and a central processing unit (CPU), and the like. The engine control unit 30 receives detection information of various sensors as input, such as the rotation speed sensor 20, the air flow sensor 21, the selective reduction catalyst temperature sensor 22, and the NOx absorption catalyst temperature sensor 23, as well as other vehicle driving information, such as an accelerator operation amount of the vehicle, calculates, on the basis of the above-described various kinds of information, the fuel injection amount and the fuel injection timing from the fuel injection nozzle 3, the position of the electronically controlled throttle valve 6, the urea water injection amount and the urea water injection timing from the urea water injector 14, and the position of the EGR valve 17, and performs operation control of the above-described various instruments, thereby performing operation control of the engine 2.

Additionally, the engine control unit 30 has the function of performing NOx purge removing the NOx absorbed in the NOx absorption catalyst 11, by reducing the exhaust air/fuel ratio through post injection and/or the like. In the present embodiment, it is possible to use, as the NOx purge, rich A/F purge (second purge control) and slightly leaner A/F purge (first purge control). The rich A/F purge makes the air/fuel ratio of the exhaust flowing into the NOx absorption catalyst 11 (hereinafter referred to as the exhaust air/fuel ratio) rich, i.e., lower than 14.7, so as to reduce and purify the NOx in the NOx absorption catalyst 11. The slightly leaner A/F purge sets the exhaust air/fuel ratio to a stoichiometric air/fuel ratio or to a slightly leaner air/fuel ratio (14.7 to 16), so as to cause the NOx absorption catalyst 11 to discharge the NOx. Note that these NOx purges (the rich A/F purge, the slightly leaner A/F purge) may be feedback-controlled on the basis of the detected value of an air/fuel ratio sensor, which is provided in the exhaust upstream side of the NOx absorption catalyst 11 and is not shown.

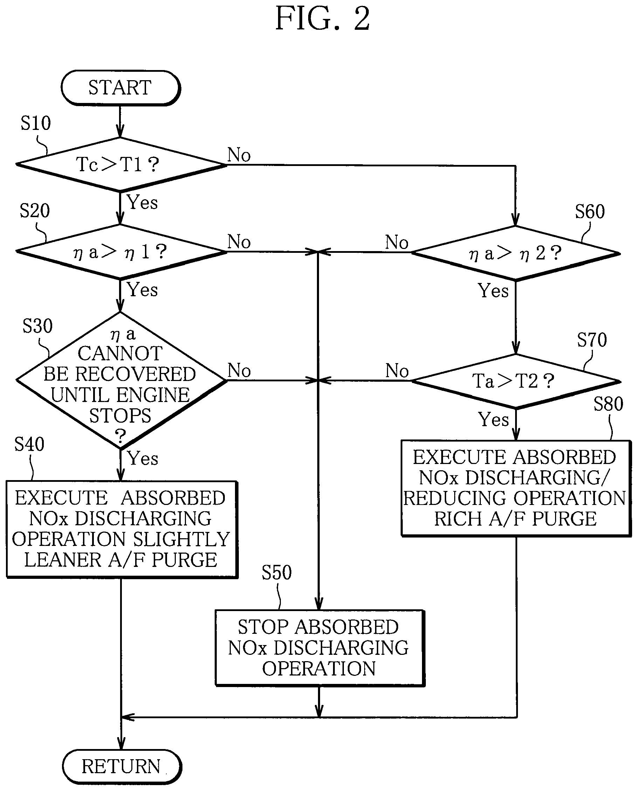

Next, using FIG. 2, a description will be given of a first embodiment of NOx purge control removing the NOx absorbed in the NOx absorption catalyst 11.

FIG. 2 is a flowchart showing a NOx purge control procedure in the engine control unit 30 of the first embodiment.

The operation control of the exhaust purification apparatus 1 in the present embodiment shown in FIG.2 is repeatedly performed in the engine control unit 30 during engine operation at every predetermined time period.

First, in step S10, a temperature Tc of the selective reduction catalyst 13 is input from the selective reduction catalyst temperature sensor 22, and it is determined whether or not the temperature Tc is higher than a first temperature threshold value T1. The first temperature threshold value T1 may be set to an activating temperature that sufficiently enables reduction of the NOx in the selective reduction catalyst 13. The activating temperature of the selective reduction catalyst 13 is, for example, 180°C. When the temperature Tc of the selective reduction catalyst 13 is higher than the first temperature threshold value T1, the present routine proceeds to step S20. When the temperature Tc is equal to or lower than the first temperature threshold value T1, the present routine proceeds to step S60.

In step S20, a NOx absorption rate ηa (nitrogen oxide absorption rate) of the NOx absorption catalyst 11 is estimated (a nitrogen oxide absorption rate estimator), and it is determined whether or not the NOx absorption rate ηa is higher than a first absorption threshold value η1. The NOx absorption rate ηa is the ratio of a NOx absorption amount Qa to a NOx absorbable amount Qb. The NOx absorbable amount Qb is, for example, a value that is confirmed and set in advance on the basis of the temperature Tc of the selective reduction catalyst 13. The NOx absorption amount Qa is the current absorption amount of the NOx, and may be estimated on the basis of, for example, the operation time and the operation state of the engine 2 from the end of the previous NOx purge until now. The first absorption threshold value η1 may be set to, for example, about 50%. When the NOx absorption rate ηa is higher than the first absorption threshold value η1, the present routine proceeds to step S30. When the NOx absorption rate ηa is equal to or less than the first absorption threshold value η1, the present routine proceeds to step S50.

In step S30, it is determined whether or not the NOx absorption rate ηa cannot be recovered to the first absorption threshold value η1 or less until the engine stops. Specifically, it is determined whether or not it is a driving pattern in which the engine does not stop until at least a predetermined time period T3 elapses (the operation continuation estimator). When it is the driving pattern in which the engine does not stop within the predetermined time period T3, the recovery can be made, and the present routine proceeds to step S50. When it is a driving pattern in which the engine may stop within the predetermined time period T3, the recovery cannot be made, and the present routine proceeds to step S40. The predetermined time period T3 may be set to the time period required for the NOx absorption rate ηa of the NOx absorption catalyst 11 to be decreased from 100% to the first absorption threshold value η1 by the slightly leaner A/F purge. Whether or not it is the driving pattern in which the engine does not stop may simply be determined by the information of a car navigation system, the change in vehicle speed, and/or the like. For example, a vehicle is determined to be traveling on an expressway, on the basis of the vehicle position information from the car navigation system, or when vehicle traveling speed is maintained at 80 km/h or more for a predetermined time period or more. When the vehicle is determined to be traveling on the expressway, it may be determined to be the driving pattern in which the engine does not stop within the predetermined time period T3. Alternatively, whether or not it is the driving pattern in which the engine does not stop within the predetermined time period T3 may be determined on the basis of a traveling route that is set in the car navigation system.

In step S40, the slightly leaner A/F purge is performed to cause the NOx absorption catalyst 11 to discharge the NOx (the first purge controller). Note that when a sensor detecting the oxygen concentration is provided in the downstream of the NOx absorption catalyst 11, the air/fuel ratio control of the slightly leaner A/F purge may be performed by using the oxygen concentration instead of the exhaust air/fuel ratio. In this case, the control of fuel injection and/or the like may be performed such that the oxygen concentration in the exhaust flowing out from the NOx absorption catalyst 11 becomes 0.2% or more. Then, the present routine returns to the start.

In step S50, a discharging operation of the NOx from the NOx absorption catalyst 11, i.e., the slightly leaner A/F purge and the rich A/F purge are stopped. Then, the present routine returns to the start.

In step S60, it is determined whether or not the NOx absorption rate ηa of the NOx absorption catalyst 11 is higher than a second absorption threshold value η2. The second absorption threshold value η2 may be set to a value larger than the first absorption threshold value η1. When the NOx absorption rate ηa is higher than the second absorption threshold value η2, the present routine proceeds to step S70. When the NOx absorption rate ηa is equal to or less than the second absorption threshold value η2, the present routine proceeds to step S50.

In step S70, a temperature Ta of the NOx absorption catalyst 11 is input from the NOx absorption catalyst temperature sensor 23, and it is determined whether or not the temperature Ta is higher than a second temperature threshold value T2. The second temperature threshold value T2 may be set to an activating temperature that sufficiently enables reduction and purification of the NOx in the NOx absorption catalyst 11. The activating temperature of the NOx absorption catalyst 11 is, for example, 200°C. When the temperature Ta of the NOx absorption catalyst 11 is higher than the second temperature threshold value T2, the present routine proceeds to step S80. When the temperature Ta is equal to or less than the second temperature threshold value T2, the present routine proceeds to step S50.

In step S80, the rich A/F purge is performed, and the NOx is discharged from the NOx absorption catalyst 11, thereby performing reduction and purification in the NOx absorption catalyst 11 (the second purge controller). Then, the present routine returns to the start.

As described above, in the present embodiment, the exhaust passage 10 is provided with the NOx absorption catalyst 11 with excellent purification performance in a relatively low temperature zone, and the selective reduction catalyst 13 with excellent purification performance in a high temperature zone. Accordingly, it is possible to improve the NOx purification performance in a wide range of exhaust temperature.

Additionally, when the NOx absorption rate of the NOx absorption catalyst 11 is increased, the NOx absorption performance in the NOx absorption catalyst 11 is recovered by performing the NOx purge. In the present embodiment, with the control shown in FIG. 2, this is performed by switching between the slightly leaner A/F purge and the rich A/F purge, on the basis of the temperature of the selective reduction catalyst 13.

When the temperature Tc of the selective reduction catalyst 13 is higher than the first temperature threshold value T1, which is the activating temperature, the slightly leaner A/F purge is performed so as to cause the NOx absorption catalyst 11 to discharge the NOx. The NOx discharged from the NOx absorption catalyst 11 is sufficiently reduced and purified by the activated selective reduction catalyst 13. Since the exhaust air/fuel ratio of the slightly leaner A/F purge is in a range of 14.7 to 16, and is higher than the air/fuel ratio of the rich A/F purge, it is possible for the slightly leaner A/F purge to reduce the fuel consumption better than performing the rich A/F purge. Here, for example, through setting the first temperature threshold value T1 to about 50%, it is possible to reduce the NOx absorption rate of the NOx absorption catalyst 11 to be 50% or less by performing the slightly leaner A/F purge. Accordingly, it is possible to secure the NOx absorption performance at least at the next engine starting.

Note that in the case where the temperature Tc of the selective reduction catalyst 13 is higher than the first temperature threshold value T1, when the NOx absorption rate ηa of the NOx absorption catalyst 11 is equal to or less than the first absorption threshold value η1, the slightly leaner A/F purge is not performed. As mentioned above, when the NOx absorption rate ηa is equal to or less than the first absorption value η1, there is a NOx absorption ability to spare in the NOx absorption catalyst 11. Accordingly, it is possible to reduce the fuel consumption by causing the NOx absorption catalyst 11 to absorb the NOx, without performing the slightly leaner A/F purge.

Additionally, the slightly leaner A/F purge is not performed in the case where the temperature Tc of the selective reduction catalyst 13 is higher than the first temperature threshold value T1, for example, when there is a low possibility that the engine immediately stops, such as when traveling on an expressway. As mentioned above, when the operation of the engine 2 is continued, it is possible to decrease the NOx absorption rate ηa to the first absorption threshold value η1 or less by the slightly leaner A/F purge or the rich A/F purge before the engine stops without immediately performing the slightly leaner A/F purge. Accordingly, it is possible to reduce the fuel consumption while avoiding the slightly leaner A/F purge as far as possible. Note that whether or not the operation of the engine 2 is continued can easily be estimated on the basis of the information of the navigation system, the traveling speed of the vehicle, and the amount of change in the traveling speed.

Additionally, when the temperature Tc of the selective reduction catalyst 13 is equal to or less than the first temperature threshold value T1, which allows purification of the NOx, the slightly leaner A/F purge is not performed, and when the temperature Ta of the NOx absorption catalyst 11 is higher than the temperature threshold value T2, the rich A/F purge is performed, thereby reducing and purifying the NOx absorbed in the NOx absorption catalyst 11. As a result, when it is impossible to reduce and purify the NOx in the selective reduction catalyst 13, it is possible to reduce discharging of the NOx by making the exhaust air/fuel ratio rich, so as to reduce and purify the NOx in the NOx absorption catalyst 11.

Additionally, when the temperature Tc of the selective reduction catalyst 13 is equal to or less than the first temperature threshold value T1, and the temperature Ta of the NOx absorption catalyst 11 is equal to or less than the temperature threshold value T2, it is impossible to reduce and purify the NOx in both of the NOx absorption catalyst 11 and the selective reduction catalyst 13. Accordingly, it is possible to reduce the wasted fuel consumption without conducting the NOx purges (the slightly leaner A/F purge and the rich A/F purge). In such a case, the temperature of the NOx absorption catalyst 11 or the selective reduction catalyst 13 may be increased by performing control that increases the exhaust temperature by intake throttling and/or the like.

Note that, when the temperature Tc of the selective reduction catalyst 13 is equal to or less than the first temperature threshold value T1, and the NOx absorption rate ηa of the NOx absorption catalyst 11 is equal to or less than the second absorption threshold value η2, the rich A/F purge is not performed, and the NOx absorption catalyst 11 is caused to absorb the NOx. Since the second absorption threshold value η2 is the value larger than the first absorption threshold value η1, it is possible to further reduce the fuel consumption by decreasing the opportunities for performing the rich A/F purge requiring a high fuel consumption.

As mentioned above, the rich A/F purge requiring the high fuel consumption is limited to the case where the temperature Tc of the selective reduction catalyst 13 is equal to or less than the first temperature threshold value T1, and when the temperature Tc of the selective reduction catalyst 13 is higher than the first temperature threshold value T1, the slightly leaner A/F purge is performed so as to cause the NOx absorption catalyst 11 to discharge the NOx, thereby reducing and purifying the NOx by the selective reduction catalyst 13. As a result, it is possible to decrease the NOx absorption rate ηa of the NOx absorption catalyst 11 while reducing the fuel consumption. Additionally, when decreasing this NOx absorption rate ηa, the leakage of the NOx to the outside is reduced by the selective reduction catalyst 13, and the discharging of unburned fuels such as HC and/or CO is also reduced, thereby allowing improvement of the exhaust purification performance.

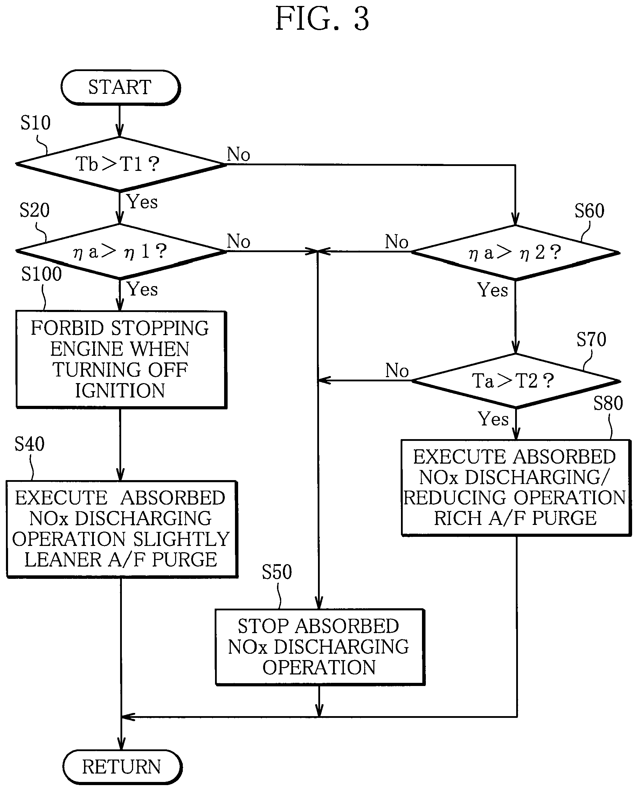

Next, using FIG. 3, a description will be given of a second embodiment of NOx purge control reducing and purifying the NOx absorbed in the NOx absorption catalyst 11.

FIG. 3 is a flowchart showing a NOx purge control procedure in the engine control unit 30 of the second embodiment. Hereinafter, a description will be given only of the features that are different from those of the first embodiment shown in FIG. 2.

In the present embodiment, when it is determined that the NOx absorption rate ηa is higher than the first absorption threshold value η1 in step S20, the present routine proceeds to step S100.

In step S100, it is forbidden, for a predetermined time period T3, to stop the engine 2 when turning off the ignition of the vehicle. Note that, as described above, this predetermined time period T3 is the time period in which the NOx absorption rate ηa of the NOx absorption catalyst 11 can be decreased from 100% to the first absorption threshold value η1 by the slightly leaner A/F purge, and corresponds to the predetermined time of the present invention. Then, the present routine proceeds to step S40.

By controlling as described above, in the present embodiment, when the temperature Tc of the selective reduction catalyst 13 is higher than the first temperature threshold value T1, and the NOx absorption rate ηa is higher than the first absorption threshold value η1, the slightly leaner A/F purge is performed after restricting, for the predetermined time period T3, stopping of the engine 2 even if the ignition is turned off. Accordingly, it is possible to stop the engine 2 in a state where the NOx absorption rate ηa is decreased to the first absorption threshold value η1 for sure. As a result, as in the first embodiment, it is possible to cause the NOx absorption catalyst 11 to absorb the NOx at the next engine starting, and thus it is possible to reduce discharging of the NOx immediately after the engine starting.

Note that the present invention is not limited to the above-described embodiments. The present invention may widely be applied to engines provided with, as an exhaust purification apparatus, the NOx absorption catalyst and the selective reduction catalyst in an exhaust passage.

## Claims

1. An exhaust purification apparatus for an engine, including:
a nitrogen oxide absorption reduction catalyst (11) provided in an exhaust passage (10) of an engine (2), and absorbing nitrogen oxide in exhaust;
a selective reduction catalyst (13) provided in the exhaust passage (10) on a downstream side of the nitrogen oxide absorption reduction catalyst (11), and reducing and purifying the nitrogen oxide by using a reducing agent;
a first temperature detector (22) configured to detect a temperature of the selective reduction catalyst (13); and
a nitrogen oxide absorption rate estimator (30) configured to estimate a nitrogen oxide absorption rate of the nitrogen oxide absorption reduction catalyst (11); the exhaust purification apparatus being **characterized by** comprising
a first purge controller (30) configured to, when the temperature of the selective reduction catalyst (13) is higher than a first temperature threshold value, and the nitrogen oxide absorption rate is higher than a first absorption threshold value, execute a first purge control that sets an air/fuel ratio of the exhaust flowing to the nitrogen oxide absorption reduction catalyst (11) to a stoichiometric air/fuel ratio or to a slightly leaner air/fuel ratio than the stoichiometric air/fuel ratio, and causing the nitrogen oxide absorbed in the nitrogen oxide absorption reduction catalyst (11) to be discharged from the nitrogen oxide absorption reduction catalyst (11) to the downstream.

2. The exhaust purification apparatus for the engine according to claim 1, **characterized in that**, when stopping of the engine (2) is instructed, the first purge controller (30) performs the first purge control by regulating the stopping of the engine (2) until a predetermined time period elapses.

3. The exhaust purification apparatus for the engine according to claim 1 or 2, **characterized by** further comprising:
an operation continuation estimator (30) configured to estimate whether an operation of the engine (2) is continued longer than a predetermined time period,
wherein, when the operation continuation estimator (30) estimates that the operation is continued longer than the predetermined time period, the first purge controller (30) regulates starting of execution of the first purge control.

4. The exhaust purification apparatus for the engine according to claim 3, **characterized in that** the engine (2) is mounted, as a traveling driving source, on a vehicle including a navigation system, and
the operation continuation estimator (30) estimates, on the basis of a traveling route of the vehicle that is set in the navigation system, that the operation is continued.

5. The exhaust purification apparatus for the engine according to claim 3, **characterized in that**
the engine (2) is mounted on a vehicle as a traveling driving source, and
the operation continuation estimator (30) estimates, on the basis of a traveling speed of the vehicle and an amount of change in the traveling speed, that the operation is continued.

6. The exhaust purification apparatus for the engine according to claims 1 to 5, **characterized in that**, when the temperature of the selective reduction catalyst (13) is equal to or less than the first temperature threshold value, the first purge controller (30) regulates execution of the first purge control.

7. The exhaust purification apparatus for the engine according to claim 6, **characterized by** further comprising:
a second purge controller (30) configured to, when the temperature of the selective reduction catalyst (13) is equal to or less than the first temperature threshold value, and the nitrogen oxide absorption rate is higher than a second absorption threshold value that is set to be a value higher than the first absorption threshold value, execute a second purge control that sets the air/fuel ratio of the exhaust to a rich air/fuel ratio, and causing the nitrogen oxide absorbed in the nitrogen oxide absorption reduction catalyst (11) to be reduced and purified.

8. The exhaust purification apparatus for the engine according to claim 7, **characterized by** further comprising:
a second temperature detector (23) configured to detect a temperature of the nitrogen oxide absorption reduction catalyst (11),
wherein, when the temperature of the nitrogen oxide absorption reduction catalyst (11) is lower than a second temperature threshold value, the second purge controller (30) regulates execution of the second purge control.

## Patentansprüche

1. Abgasreinigungsvorrichtung für einen Verbrennungsmotor, mit:
einem in einem Abgaskanal (10) eines Verbrennungsmotors (2) angeordneten Stickstoffoxidabsorptionsreduktionskatalysator (11) zum Absorbieren von Stickstoffoxid im Abgas;
einem im Abgaskanal (10) stromabwärtsseitig vom Stickstoffoxidabsorptionsreduktionskatalysator (11) angeordneten selektiven Reduktionskatalysator (13) zum Reduzieren und Reinigen des Stickstoffoxids unter Verwendung eines Reduktionsmittels;
einem ersten Temperaturdetektor (22) der dafür konfiguriert ist, eine Temperatur des selektiven Reduktionskatalysators (13) zu erfassen; und
einer Stickstoffoxidabsorptionsratenschätzeinrichtung (30), die dafür konfiguriert ist, eine Stickstoffoxidabsorptionsrate des Stickstoffoxidabsorptionsreduktionskatalysators (11) zu schätzen,
wobei die Abgasreinigungsvorrichtung **dadurch gekennzeichnet ist, dass** sie aufweist:
eine erste Spülsteuerungseinheit (30), die dafür konfiguriert ist, eine erste Spülsteuerung auszuführen, gemäß der das Luft/Kraftstoff-Verhältnis des zum Stickstoffoxidabsorptionsreduktionskatalysator (11) strömenden Abgases auf ein stöchiometrisches Luft/Kraftstoff-Verhältnis oder auf ein etwas magereres Luft/Kraftstoff-Verhältnis als das stöchiometrische Luft-Kraftstoff-Verhältnis eingestellt wird und veranlasst wird, dass das im Stickstoffoxidabsorptionsreduktionskatalysator (11) absorbierte Stickstoffoxid vom Stickstoffoxidabsorptionsreduktionskatalysator (11) zur Stromabwärtsseite ausgegeben wird, wenn die Temperatur des selektiven Reduktionskatalysators (13) höher ist als ein erster Temperaturschwellenwert und die Stickstoffoxidabsorptionsrate höher ist als ein erster Absorptionsschwellenwert.

2. Abgasreinigungsvorrichtung für den Verbrennungsmotor nach Anspruch 1,
**dadurch gekennzeichnet, dass**, wenn eine Anweisung zum Stoppen des Verbrennungsmotors (2) vorliegt, die erste Spülsteuerungseinheit (30) die erste Spülsteuerung durch Regeln des Stoppens des Verbrennungsmotors (2) ausführt, bis eine vorgegebene Zeitdauer verstrichen ist.

3. Abgasreinigungsvorrichtung für den Verbrennungsmotor nach Anspruch 1 oder 2, **dadurch gekennzeichnet, dass** die Abgasreinigungsvorrichtung ferner aufweist:
eine Betriebsfortsetzungsschätzeinrichtung (30), die dafür konfiguriert ist, zu schätzen, ob ein Betrieb des Verbrennungsmotors (2) länger als für eine vorgegebene Zeitdauer fortgesetzt wird,
wobei, wenn die Betriebsfortsetzungsschätzeinrichtung (30) schätzt, dass der Betrieb länger fortgesetzt wird als für die vorgegebene Zeitdauer, die erste Spülsteuerungseinrichtung (30) den Start der Ausführung der ersten Spülsteuerung regelt.

4. Abgasreinigungsvorrichtung für den Verbrennungsmotor nach Anspruch 3, **dadurch gekennzeichnet, dass**
der Verbrennungsmotor (2) als eine Fahrantriebsquelle an einem Fahrzeug installiert ist, das ein Navigationssystem aufweist; und
die Betriebsfortsetzungsschätzeinrichtung (30) auf der Basis einer im Navigationssystem gesetzten Fahrtroute des Fahrzeugs schätzt, dass der Betrieb fortgesetzt wird.

5. Abgasreinigungsvorrichtung für den Verbrennungsmotor nach Anspruch 3,
**dadurch gekennzeichnet, dass**
der Verbrennungsmotor (2) als eine Fahrantriebsquelle an einem Fahrzeug montiert ist, und
die Betriebsfortsetzungsschätzeinrichtung (30) auf der Basis einer Fahrgeschwindigkeit des Fahrzeugs und einem Änderungsmaß der Fahrgeschwindigkeit schätzt, dass der Betrieb fortgesetzt wird.

6. Abgasreinigungsvorrichtung für den Verbrennungsmotor nach den Ansprüchen 1 bis 5, **dadurch gekennzeichnet, dass**,
wenn die Temperatur des selektiven Reduktionskatalysators (13) kleiner oder gleich dem ersten Temperaturschwellenwert ist, die erste Spülsteuerungseinheit (30) die Ausführung der ersten Spülsteuerung regelt.

7. Abgasreinigungsvorrichtung für den Verbrennungsmotor nach Anspruch 6, **dadurch gekennzeichnet, dass** die Abgasreinigungsvorrichtung ferner aufweist:
eine zweite Spülsteuerungseinheit (30), die dafür konfiguriert ist, eine zweite Spülsteuerung auszuführen, gemäß der das Luft/Kraftstoff-Verhältnis des Abgases auf ein fettes Luft/Kraftstoff-Verhältnis eingestellt wird und veranlasst wird, dass das im Stickstoffoxidabsorptionsreduktionskatalysator (11) absorbierte Stickstoffoxid reduziert und gereinigt wird, wenn die Temperatur des selektiven Reduktionskatalysators (13) kleiner oder gleich dem ersten Temperaturschwellenwert ist und die Stickstoffoxidabsorptionsrate höher ist als ein zweiter Absorptionsschwellenwert, der als ein Wert gesetzt ist, der höher ist als der erste Absorptionsschwellenwert.

8. Abgasreinigungsvorrichtung für den Verbrennungsmotor nach Anspruch 7, **dadurch gekennzeichnet, dass** die Abgasreinigungsvorrichtung ferner aufweist:
einen zweiten Temperaturdetektor (23), der dafür konfiguriert ist, eine Temperatur des Stickstoffoxidabsorptionsreduktionskatalysators (11) zu erfassen,
wobei, wenn die Temperatur des Stickstoffoxidabsorptionsreduktionskatalysators (11) niedriger ist als ein zweiter Temperaturschwellenwert, die zweite Spülsteuerungseinheit (30) die Ausführung der zweiten Spülsteuerung regelt.

## Revendications

1. Appareil de purification des gaz d'échappement pour un moteur, comprenant :
un catalyseur de réduction de l'absorption de l'oxyde d'azote (11) prévu dans un passage d'échappement (10) d'un moteur (2), et l'absorption de l'oxyde d'azote des gaz d'échappement ;
un catalyseur de réduction sélective (13) prévu dans le passage d'échappement (10) d'un côté aval du catalyseur de réduction de l'absorption de l'oxyde d'azote (11), et la réduction et la purification de l'oxyde d'azote à l'aide d'un agent réducteur ;
un premier détecteur de température (22) configuré pour détecter une température du catalyseur de réduction sélective (13) ; et
un estimateur du taux d'absorption de l'oxyde d'azote (30) configuré pour estimer un taux d'absorption de l'oxyde d'azote du catalyseur de réduction de l'absorption de l'oxyde d'azote (11) ; l'appareil de purification des gaz d'échappement étant **caractérisé en ce qu'**il comprend un premier dispositif de commande de purge (30) configuré pour, lorsque la température du catalyseur de réduction sélective (13) est supérieure à une première valeur seuil de la température, et que le taux d'absorption de l'oxyde d'azote est supérieur à une première valeur seuil de l'absorption, exécuter une première commande de purge qui règle un rapport air/carburant des gaz d'échappement circulant vers le catalyseur de réduction de l'absorption de l'oxyde d'azote (11) à un rapport air/carburant stoechiométrique ou à un rapport air/carburant légèrement plus pauvre que le rapport air/carburant stoechiométrique, et amener l'oxyde d'azote absorbé dans le catalyseur de réduction de l'absorption de l'oxyde d'azote (11) à être évacué du catalyseur de réduction de l'absorption de l'oxyde d'azote (11) vers l'aval.

2. Appareil de purification des gaz d'échappement pour le moteur selon la revendication 1, **caractérisé en ce que**, lorsque l'arrêt du moteur (2) est ordonné, le premier dispositif de commande de purge (30) réalise la première commande de purge par régulation de l'arrêt du moteur (2) jusqu'à ce qu'une période de temps prédéterminée se soit écoulée.

3. Appareil de purification des gaz d'échappement pour le moteur selon la revendication 1 ou 2, **caractérisé en ce qu'**il comprend en outre :
un estimateur de poursuite de fonctionnement (30) configuré pour estimer si un fonctionnement du moteur (2) est poursuivi plus longtemps qu'une période de temps prédéterminée,
dans lequel, lorsque l'estimateur de poursuite de fonctionnement (30) estime que le fonctionnement est poursuivi plus longtemps que la période de temps prédéterminée, le premier dispositif de commande de purge (30) régule le début de l'exécution de la première commande de purge.

4. Appareil de purification des gaz d'échappement pour le moteur selon la revendication 3, **caractérisé en ce que** le moteur (2) est monté, en tant que source d'entraînement de déplacement, sur un véhicule comprenant un système de navigation, et
l'estimateur de poursuite de fonctionnement (30) estime, sur la base d'un itinéraire de déplacement du véhicule qui est installé dans le système de navigation, que le fonctionnement est poursuivi.

5. Appareil de purification des gaz d'échappement pour le moteur selon la revendication 3, **caractérisé en ce que**
le moteur (2) est monté sur un véhicule en tant que source d'entraînement de déplacement, et
l'estimateur de poursuite de fonctionnement (30) estime, sur la base d'une vitesse de déplacement du véhicule et d'une quantité de changement de la vitesse de déplacement, que le fonctionnement est poursuivi.

6. Appareil de purification des gaz d'échappement pour le moteur selon les revendications 1 à 5, **caractérisé en ce que**, lorsque la température du catalyseur de réduction sélective (13) est inférieure ou égale à la première valeur seuil de la température, le premier dispositif de commande de purge (30) régule l'exécution de la première commande de purge.

7. Appareil de purification des gaz d'échappement pour le moteur selon la revendication 6, caractérisé en ce qui) comprend en outre :
un second dispositif de commande de purge (30) configuré pour, lorsque la température du catalyseur de réduction sélective (13) est inférieure ou égale à la première valeur seuil de la température, et que le taux d'absorption de l'oxyde d'azote est supérieur à une seconde valeur seuil de l'absorption qui est réglée pour être une valeur supérieure à la première valeur seuil de l'absorption, exécuter une seconde commande de purge qui règle le rapport air/carburant des gaz d'échappement à un rapport air/carburant riche, et amener l'oxyde d'azote absorbé dans le catalyseur de réduction de l'absorption de l'oxyde d'azote (11) à être réduit et purifié.

8. Appareil de purification des gaz d'échappement pour le moteur selon la revendication 7, **caractérisé en ce qu'**il comprend en outre :
un second détecteur de température (23) configuré pour détecter une température du catalyseur de réduction de l'absorption de l'oxyde d'azote (11),
dans lequel, lorsque la température du catalyseur de réduction de l'absorption de l'oxyde d'azote (11) est inférieure à une seconde valeur seuil de la température, le second dispositif de commande de purge (30) régule l'exécution de la seconde commande de purge.
